# FASCICULE DE BREVET EUROPEEN

(11) **EP 0 658 302 B1**
(45) Date de publication et mention de la délivrance du brevet: **25.03.1998**
(21) Numéro de dépôt: 94402907.3
(22) Date de dépôt: 16.12.1994
(51) Int. Cl.: A01G 13/10

(54) **Dispositif de protection de plants d'arbres**
Baumschutzvorrichtung
Protection device for trees

(30) Priorité: 17.12.1993 FR 9315234
(43) Date de publication de la demande: 21.06.1995
(73) Titulaire: Nortene Technologies, F-59000 Lille (FR)
(72) Inventeur: Lemoine, Henri, F-94130 Nogent sur Marne (FR)
(74) Mandataire: Leszczynski, André

(56) Documents cités:
- DE-U- 7 724 769
- DE-U- 9 216 676
- FR-A- 2 483 170
- FR-A- 2 618 294
- FR-A- 2 664 128
- FR-A- 2 674 097
- FR-A- 2 680 076
- GB-A- 836 555
- US-A- 2 056 136

## Description

La présente invention est relative à un dispositif de protection de plants d'arbres.

On utilise couramment, pour la protection contre les cervidés, de plants, tels que des jeunes arbres, pendant leurs premières années de croissance, des dispositifs de protection constitués chacun par un élément tubulaire formé d'un matériau à structure réticulaire, notamment en matière plastique, disposé à distance autour dudit plant à protéger et maintenu en place à l'aide de piquets plantés dans le sol. Un tel dispositif est connu par FR-A-2664128.

Les éléments tubulaires en matériau à structure réticulaire sont en général réunis aux piquets par des moyens de fixation tels que des agrafes, des liens, ou des attaches rapides.

La hauteur de l'élément tubulaire ainsi que la forme et les dimensions des mailles de la structure sont choisis en fonction de l'utilisation envisagée.

Ainsi, pour la protection des plants contre les cervidés, on utilise des structures réticulaires constituées d'un ensemble de brins en matière plastique extrudée, réunis en leurs entrecroisements et définissant des mailles de section carrée ou losange ayant une longueur de côté comprise entre 10 mm et 30 mm, en particulier de l'ordre de 20 mm.

L'inconvénient de telles structures connues est de laisser passer le système branchu des jeunes plants qui se trouve alors à portée des cervidés.

La présente invention se propose de réaliser un dispositif de protection évitant notamment cet inconvénient.

Le dispositif selon la présente invention se caractérise essentiellement par le fait qu'il comprend un second ensemble de brins croisés, en matière plastique, de section inférieure à celle des brins du premier ensemble, et réunis en leurs entrecroisements de manière à constituer une structure réticulaire à mailles présentant chacune une section d'ouverture notablement inférieure à la section d'ouverture des mailles définies par le premier ensemble de brins.

Avantageusement, le rapport de section des brins du premier ensemble et des brins du second ensemble est compris entre 10 et 50, et le rapport des sections d'ouverture des mailles définies par le premier ensemble de brins et des sections d'ouverture des mailles définies par le second ensemble de brins est compris entre 10 et 100 .

On comprend que le second ensemble de brins croisés définit à l'intérieur des mailles formées par le premier ensemble de brins croisés, une structure de grillage à petites mailles empêchant notamment le passage du système branchu des jeunes plants, l'ensemble à petites mailles offrant ainsi une protection efficace contre l'abroutissement et le frottis des cervidés. Le dispositif, selon l'invention, présente une bonne résistance à la déchirure, confère au plant autour duquel il est mis en place une certaine protection contre le vent, et procure également un certain effet de serre qui favorise la pousse du plant.

Le dispositif selon l'invention peut par exemple être réalisé en polyéthylène, les mailles définies par les deux ensembles de brins croisés ayant une forme losange ou sensiblement carrée.

Un tel dispositif peut être réalisé d'un seul tenant par extrusion en mettant en oeuvre le procédé connu sous le nom de NETLON et décrit par exemple dans le brevet britannique 836555.

On utilise à cet effet un dispositif d'extrusion comprenant des éléments de filière concentriques animés d'un mouvement de rotation relative, par exemple un élément de filière fixe et un élément de filière tournant, ou deux éléments de filière tournant en sens contraire. L'un des éléments de filière présente une pluralité de crans périphériques dont la section correspond à la section voulue pour les brins longitudinaux de la structure, et l'autre élément de filière présente une pluralité de crans dont la section correspond à la section voulue pour les brins transversaux de la structure, les crans des différents éléments de filière communiquant avec des canaux d'amenée de la matière plastique ramollie en provenance de l'extrudeuse. Les brins transversaux sont ainsi extrudés sous forme de filaments hélicoïdaux et adhèrent aux brins longitudinaux à la sortie des éléments de filière de manière à former la structure réticulaire voulue.

Lors de la mise en oeuvre d'un tel dispositif d'extrusion, on confère aux crans des filières des sections respectives adaptées aux sections voulues pour les deux ensembles de brins à extruder.

La structure extrudée est ensuite amenée à passer sur la surface d'un conformateur disposé concentriquement par rapport aux éléments de filière, le diamètre du conformateur étant supérieur, de préférence de l'ordre de 10 %, à celui des éléments de filière à la sortie de ceux-ci.

Dans le but de mieux faire comprendre l'invention on va maintenant en décrire un exemple de réalisation à titre nullement limitatif en se référant au dessin annexé dans lequel :
- la figure 1 illustre schématiquement un dispositif selon l'invention, et
- la figure 2 est une vue de détail de la structure du dispositif de la figure 1.

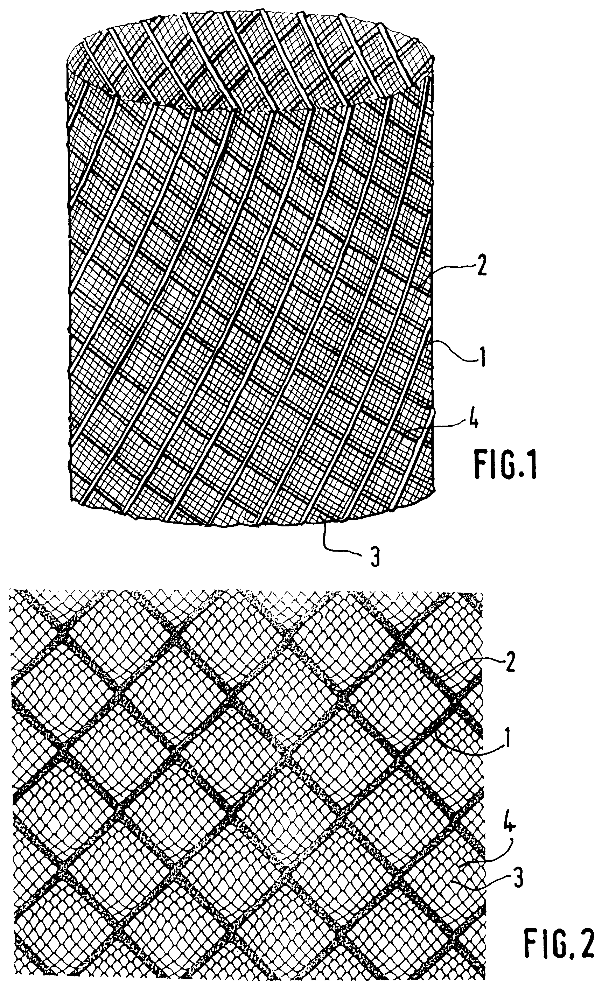

La gaine tubulaire, constituant le dispositif de protection selon l'invention, telle qu'illustrée aux figures 1 et 2, comprend un premier ensemble de brins croisés 1, 2 définissant une structure réticulaire "à grandes mailles", chaque brin 1, 2 présentant une largeur d'environ 2 mm, les mailles de la structure formées par les brins 1, 2 ayant une forme sensiblement carrée de 20 mm de côté.

La structure selon l'invention comprend un second ensemble de brins croisés 3, 4 définissant une structure réticulaire "à petites mailles" à l'intérieur des "grandes mailles" définies par les brins 1 et 2.

La section des brins 3, 4 est très faible, le rapport de section entre les brins 1, 2 et les brins 3, 4 étant de l'ordre de 13.

La structure illustrée est avantageusement fabriquée d'un seul tenant en polyéthylène par extrusion en mettant en oeuvre le procédé NETLON mentionné précédemment.

## Revendications

1. Dispositif de protection de plants d'arbres, comprenant un élément tubulaire formé d'un matériau à structure réticulaire et apte à être disposé à distance autour du plant à protéger, ledit élément tubulaire étant constitué d'un ensemble de brins croisés en matière plastique, réunis en leurs entrecroisements, et définissant des mailles de section carrée ou losange, caractérisé par le fait qu'il comprend un second ensemble de brins croisés (3,4), en matière plastique, de section inférieure à celle des brins du premier ensemble (1,2), réunis en leurs entrecroisements de manière à constituer une structure réticulaire dont les mailles présentent, chacune, une section d'ouverture notablement inférieure à la section d'ouverture des mailles définies par le premier ensemble de brins (1,2).

2. Dispositif selon la revendication 1, caractérisé par le fait que le rapport de section des brins (1,2) du premier ensemble et des brins (3,4) du second ensemble est compris entre 10 et 50.

3. Dispositif selon l'une quelconque des revendications 1 et 2, caractérisé par le fait que le rapport des sections d'ouverture des mailles définies par le premier ensemble de brins (1,2) et des sections d'ouverture des mailles définies par le second ensemble de brins (3,4) est compris entre 10 et 100.

4. Dispositif selon l'une quelconque des revendications précédentes, caractérisé par le fait qu'il est réalisé d'un seul tenant par extrusion.

## Claims

1. Device for protecting saplings, comprising a tubular element formed from a material having a reticulate structure and capable of being arranged, at some distance, around the sapling to be protected, the said tubular element consisting of a set of crossed plastic strands joined together at their intersections and defining mesh cells of square or diamond-shaped cross-section, characterized in that it comprises a second set of crossed plastic strands (3, 4), of smaller cross-section than that of the strands of the first set (1, 2), joined together at their intersections so as to form a reticulate structure, each of the mesh cells of which has an opening cross-section appreciably less than the opening cross-section of the mesh cells defined by the first set of strands (1, 2).

2. Device according to Claim 1, characterized in that the ratio of the cross-section of the strands (1, 2) of the first set to the cross-section of the strands (3, 4) of the second set is between 10 and 50.

3. Device according to either of Claims 1 and 2, characterized in that the ratio of the opening cross-sections of the mesh cells defined by the first set of strands (1, 2) to the opening cross-sections of the mesh cells defined by the second set of strands (3, 4) is between 10 and 100.

4. Device according to any one of the preceding claims, characterized in that it is produced as one piece by extrusion.

## Patentansprüche

1. Vorrichtung für den Schutz von jungen Baumschößlingen, bestehend aus einem rohrförmigen Element mit netzartiger Struktur und so geformt, daß es in einer gewissen Entfernung um die zu schützende Jungpflanze herum angeordnet werden kann; und wobei das besagte rohrförmige Element aus einer Anzahl von über Kreuz liegenden Monofilamenten aus Kunststoff besteht, die in ihren Kreuzungspunkten miteinander verbunden werden und auf diese Weise eine Netzstruktur mit rechteckigen oder rautenförmigen Maschen bilden; weiterhin **dadurch gekennzeichnet,** daß dieses Element eine zweite Struktur aus über Kreuz liegenden Monofilamenten (3, 4) beinhaltet, die ebenfalls aus Kunststoff bestehen, jedoch einen geringeren Querschnitt als die Monofilamente (1, 2) des ersten rohrförmigen Elements haben, wobei auch diese zweiten Monofilamente in ihren Kreuzungspunkten miteinander verbunden werden und auf diese Weise ebenfalls eine Netzstruktur mit Maschen bilden, deren Öffnung deutlich kleiner ist als die Größe der Maschen der durch die ersten Monofilamente (1, 2) gebildeten Netzstruktur.

2. Vorrichtung nach Anspruch 1, **dadurch gekennzeichnet,** daß das Verhältnis zwischen dem Querschnitt der Monofilamente (1, 2) der ersten Netzstruktur und dem Querschnitt der Monofilamente (3, 4) der zweiten Netzstruktur zwischen 10:1 und 50:1 liegt.

3. Vorrichtung nach einem der Ansprüche 1 und 2, **dadurch gekennzeichnet,** daß das Verhältnis zwischen der Maschenweite der durch die ersten Monofilamente (1, 2) definierten Struktur und der Maschenweite der durch die zweiten Monofilamente (3, 4) definierten Struktur zwischen 10:1 und 100:1 liegt.

4. Vorrichtung nach einem der vorangegangenen Ansprüche, **dadurch gekennzeichnet,** daß diese Struktur aus einem Stück durch Extrudieren hergestellt wird.
